# EUROPEAN PATENT SPECIFICATION

(11) **EP 1 190 625 B1**
(45) Date of publication and mention of the grant of the patent: **27.04.2005**
(21) Application number: 01203096.1
(22) Date of filing: 13.08.2001
(51) Int. Cl.: A22C 25/16, A22C 25/12

(54) **Method and apparatus for filleting fish**
Verfahren und Vorrichtung zum Filetieren von Fischen
Procédé et dispositif à lever les filets de poissons

(30) Priority: 28.08.2000 NL 1016038
(43) Date of publication of application: 27.03.2002
(73) Proprietor: Ouwehand's Rederij en Visverwerking B.V., 2222 AG Katwijk (NL)
(72) Inventor: Heerens, Gert Jan, 2871 ZH Schoonhoven (NL)
(74) Representative: Prins, Adrianus Willem, Mr. Ir.

(56) References cited:
- EP-A- 0 711 502
- EP-A- 0 734 653
- WO-A-86/03376
- DE-B- 1 074 834
- US-A- 1 639 976
- US-A- 2 612 652
- US-A- 4 601 083
- US-A- 5 830 052

## Description

The present invention relates to a method and an apparatus for filleting fish, in particular herring.

Such methods and apparatuses are known and useful in practice for all kinds of relatively hard fish, and as far as herring is concerned, therefore only the lean herring, which is often processed to so-called "sour herring". When herring is three years old, it is mature and moves to spawning grounds where it grows further and in particular the fat content increases. The herring is caught there before it deposits eggs because afterwards the herring becomes lean again. Such fat herring is called matties herring.

In matties herring, the problem occurs that the fat content is so high, is particularly higher than 20%, as a result of which this herring is very lean and therefore hard to process mechanically. Mechanical processing involves eviscerating, deskinning and deboning. When the herring is clamped, that is to say gripped in the lean meat, the herring could be drawn to pieces during the above mechanical treatments if no special measures would be taken against this. In known apparatuses, as e.g. WO-A-86/03376 for instance, the herring is therefore clamped between two belts, which, however, impedes the processing of the herring. For this reason, this work is often done manually in practice, with all the attendant drawbacks with respect to efficiency, hygiene and keeping qualities.

The object of the invention is, therefore, to provide such a filleting apparatus that the above drawback is prevented and the above treatments can yet be carried out mechanically and automatically.

According to the invention, this object is achieved if the method is characterized in that, before the fish is eviscerated and is deskinned and deboned, the fish is gripped at the chief bone. In particular, the fish, after having been gutted, that is to say after removal of heart and lungs (the gill), is gripped back of the head. In order to keep this gripping process under control, the fish can be placed with the head in a defined position, in which position a clamping element is put through the fish and clamped around the chief bone. Each fish is then gripped likewise, independently of its sizes. The chief bone, however, can also be clamped by first removing the meat at the place where the chief bone has to be gripped and then causing the clamping element to grip the chief bone from the sides of the fish; this, however, is a substantially more difficult treatment. In a practical embodiment, the clamping element contains two clamping parts, which, kept away from each other, can be put through the fish, and which then grip the chief bone under spring action.

For the purpose of processing the fish, it is easy that the fish is positioned upright over its length in a trough, which trough is moved upward, until the clamping element, put through the fish, is placed around the chief bone. Of course, the clamping element could also be moved downward. From structural considerations, in particular because the clamping element must hold the fish while moving along the processing path, the former solution is preferred. The fish, gripped at the bone by means of the clamping element, is pulled through the trough and successively passed to eviscerating, deskinning and deboning sections.

In a favorable embodiment, the clamping element is moved along an endless rail and passed through the sections in question by means of a separate dragging element belonging to each of the sections, formed by an endless conveying element, while, in each case, the clamping element is taken over from one by the following dragging element.

In the first section, evisceration can be effected by cutting open the fish at the underside and then pulling it over a rotating vane wheel. This cutting open can be realized by passing the fish over a straight horizontal knife active at constant height, but also by causing the knife used for this purpose to follow the contours of the underside of the fish. It is further possible to deform the fish such that the underside thereof is more or less straight, so that a knife active at constant height will be sufficient.

In the second section, the fish can be deskinned by passing it, after a cut has been made at the upper side of the fish, preferably over 1 to 2 mm, between or along corrugated rolls. This cut renders it possible to remove the skin on both sides without damaging the fish. The skin on one side can be removed after the skin at the other side. Also, the skin can be removed at both sides simultaneously.

In the third section, deboning takes place by moving, just back of the point where the chief bone is gripped by the clamping element, a stripping element sideward through the fish, which stripping element extends around the chief bone and downward, and through which stripping element is pulled the fish with the clamping element, while, simultaneously, the back edge with the fin is cut away by means of a back cutting element, so that from each fish two fillets are obtained and the chief bone is pulled along by the clamping element. The stripping element leaves the side bones intact, at least for the greater part, which remain stuck to the chief bone; the chief bone, together with at least the greater part of the side bones, is pulled from the fillets to be obtained. Accordingly, no or at least very few side bones are left therein. By means of a bone cutting element the chief bone is cut through near the caudal fin, after which the two fillets, held together by the caudal fin and a chief bone stump, are discharged by means of discharge means.

In order to be able to process all the fishes in the above manner, it is important that, before the fish is gripped, it is oriented from any position upright in a trough with the head directed forward.

The invention not only relates to a method, but also to an apparatus for filleting fish according to the method as indicated above. To this end, the apparatus is provided with supply and orientation elements, as well as gripping elements, to which the fishes can be supplied in a defined position, while, furthermore, processing elements are provided for eviscerating, deskinning and deboning the gripped fishes, and is characterized in that a gripping element is formed by a clamping element, which, when the fish is placed with the head in a defined position, can be put through the fish and can be clamped around the chief bone.

In order to be able, independently of the sizes of the fishes, to grip them at the chief bone in always the same manner, a trough with a positioning element is provided, which trough, when a fish has been placed therein in a defined position with the head in the direction of movement of the fish, is movable upward, until the clamping element, put through the fish, is clamped around the chief bone.

In order to pass the gripped fishes through the separate sections where the fishes are subjected to a specific processing operation, a rail is provided, along which the clamping element is movable, while the fish, gripped at the bone by means of the clamping element, can be pulled through the trough and successively to eviscerating, deskinning and deboning sections. Because the processing time and the manner in which the processing method takes place differs per section over time, it is preferred that a number of separate dragging elements formed by endless conveying means is provided for conveying the clamping element along the rail through the separate eviscerating, deskinning and deboning sections.

In the sections to be passed successively, the fishes are subjected to various processing operations. Thus, in a first section a cutting element may be provided for cutting open the fishes, when pulled over it, at the undersides, as well as a rotatable vane wheel for eviscerating the fishes to be pulled over it. In a next section, a further cutting element may be provided for cutting in the fishes at the upper sides, as well as corrugated rolls for deskinning fishes pulled between or along these rolls. In a following section, a stripping element may be provided, through which fishes can be pulled, and a back cutting element, by which, during this pulling through, the back edge with fin can be cut away from the fishes, so that from each fish two fillets are obtained. Furthermore, a bone cutting element may be provided, which can preferably be moved through or along the stripping element to cut through the chief bone near the caudal fin, as well as discharge means, by which the two fillets, held together by the caudal fin and a chief bone stump, can be discharged.

In a preferred embodiment, the supply and orientation elements may be formed by a singling element for passing the fishes supplied in bulk successively through a conveying trough narrowing in the conveying direction, while by means of a detector and an orientation unit controlled by this detector the fishes, with the head in the conveying direction, are passed successively through a further conveying trough. It is favorable if the supply and orientation elements are provided with a takeover conveying trough system for taking over the fishes from the further conveying trough upright with the abdomen in a narrowed processing trough and passing the fishes to the trough with the positioning element. In order to increase the rate of production, the takeover conveying trough system may further be provided with distribution means, by which the fishes supplied over the further conveying trough with the abdomen facing one side and the fishes supplied over the further conveying trough with the abdomen facing the other side, are taken over in separate processing troughs.

The invention will now be explained in more detail with reference to the accompanying drawing. In this drawing:

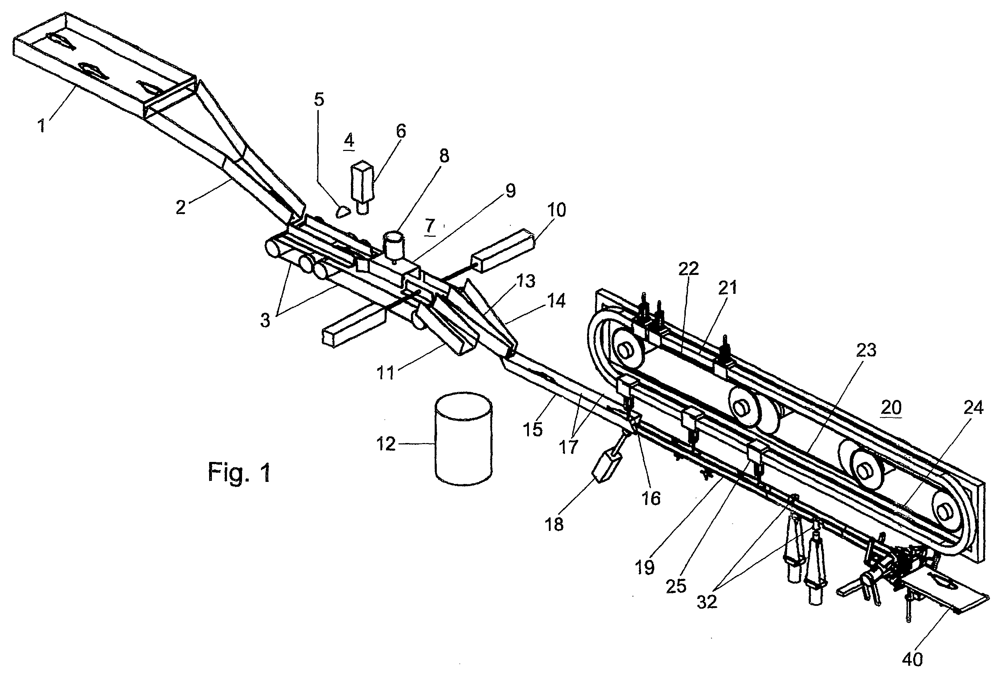

Fig. 1 is a diagrammatic view of the apparatus according to the invention;

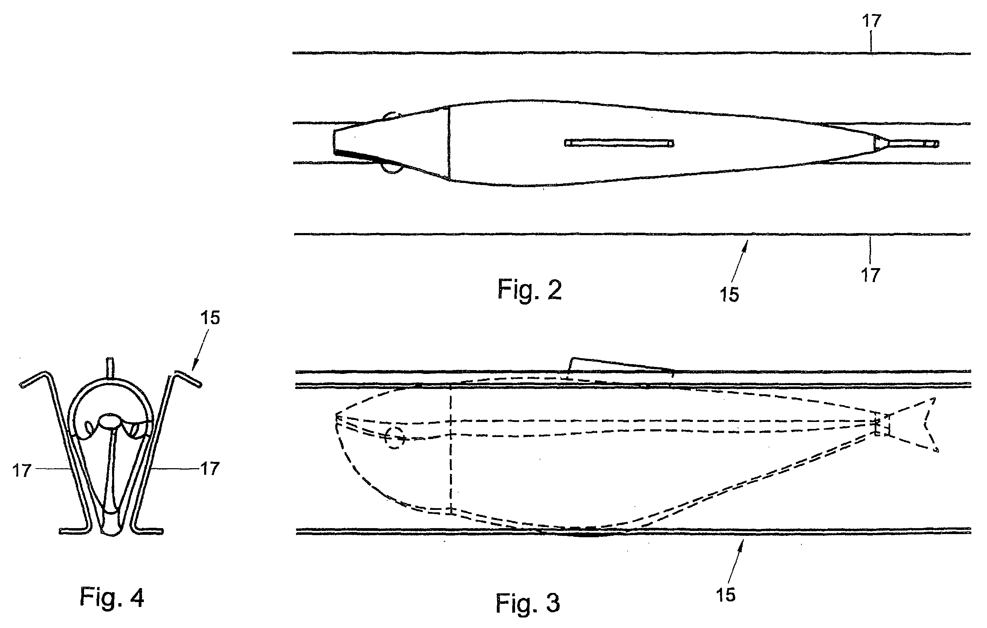

Fig. 2 is a top view of a conveying trough forming part of this apparatus;
Fig. 3 is a side view of this conveying trough;
Fig. 4 is a cross-section of this conveying trough;
Fig. 5 is a view of a clamping element forming part of the apparatus of Fig. 1, with a herring being shown completely;
Fig. 6 is a view of the clamping element of Fig. 5, with the herring being shown in cross-section;
Fig. 7 is a view of an eviscerating unit forming part of the apparatus of Fig. 1;
Fig. 8 is a front view of this eviscerating unit;

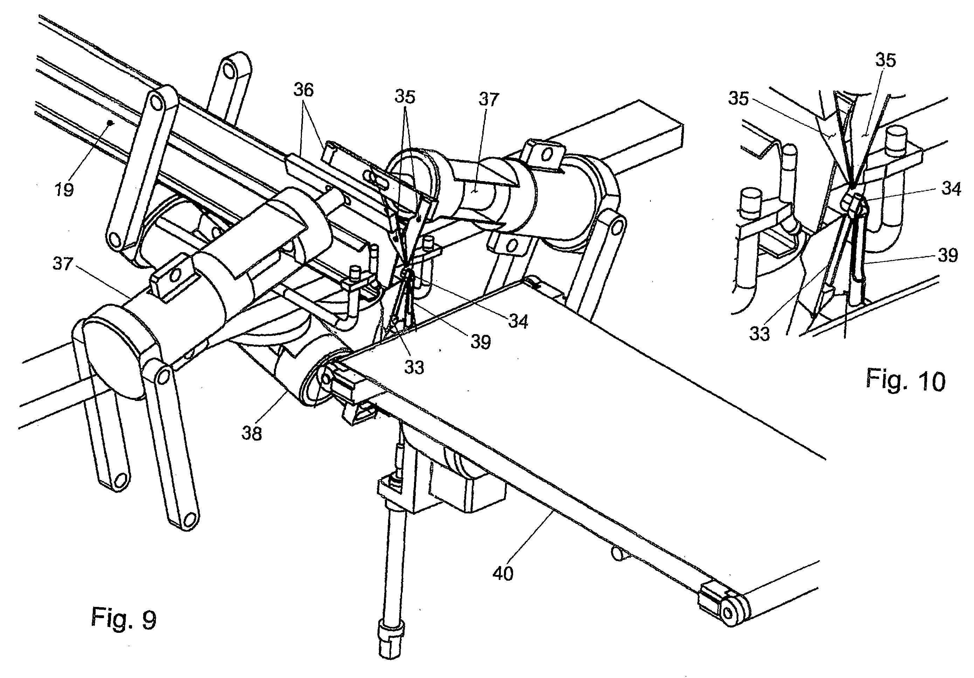

Fig. 9 is a view of a deboning unit forming part of the apparatus of Fig. 1; and
Fig. 10 is a view of a detail of the deboning unit of Fig. 9.

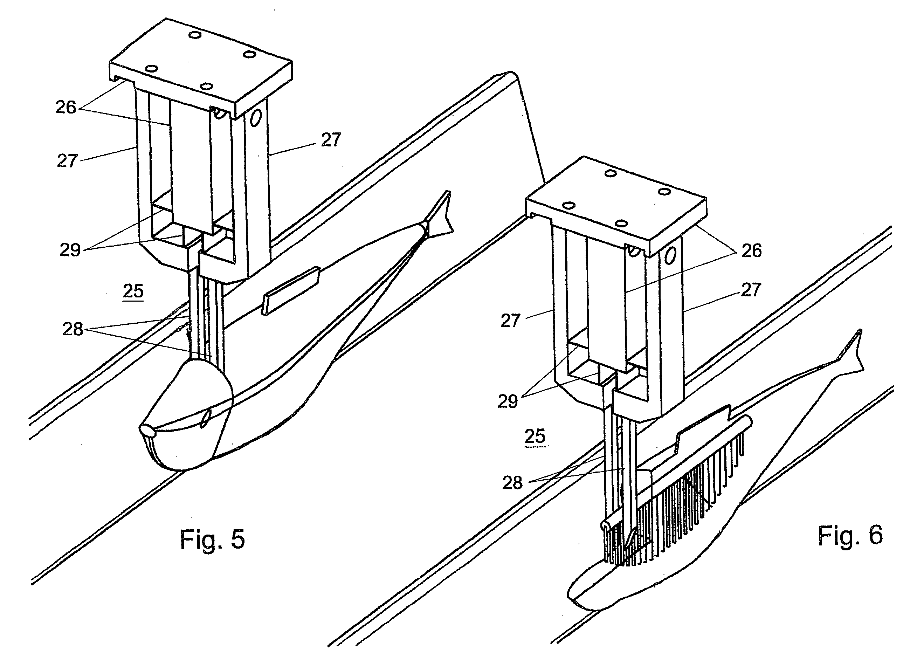

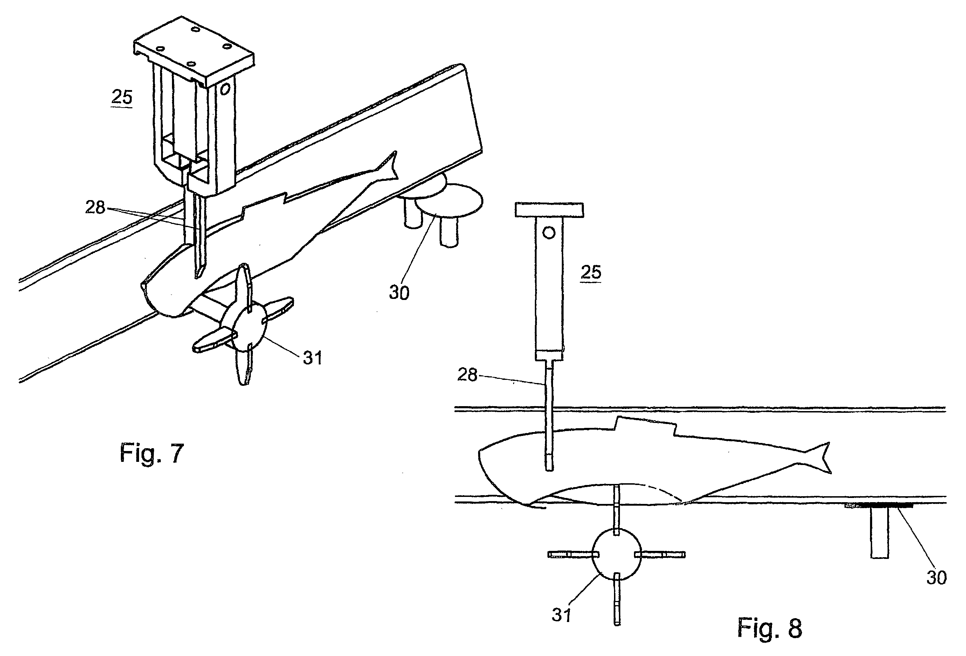

The complete method for filleting fish, in particular matties herring, proceeds in a large number of steps which, for instance, can be realized in the apparatus shown in the Figures:
1. The fishes supplied in bulk and in gutted condition are dumped into a feeding unit 1 and singled by allowing them to pass one by one to a trough 2.
2. In this gradually narrowing trough 2, the fishes, lying flat therein, are oriented in the conveying direction through vibration; the fishes will then lie in the conveying direction, either with the head or with the tail forward. Subsequently, thus oriented, the fishes are passed over conveying belts 3 under a detection unit 4 formed by a lamp 5 and a camera 6.
3. Depending on the orientation of the fishes, that is to say on their position with the head in the conveying direction forward or backward, the fishes are rotated through 180° by means of an orientation unit or rotating element 7, so that all the fishes come to lie in the conveying direction with the head forward. In the simplest form, this rotating element 7 is formed by a motor 8 which, under control of the camera, rotates a downwardly open sleeve 9 placed over a fish and thus carries along the fish.
4. By means of the camera 6, it is also established whether the fishes can be processed further or, for whatever reason, should be rejected. By means of a manipulating unit 10 controlled by the camera 6, the fishes are passed either via a trough 11 to a rejection receptacle 12 or via troughs 13 and 14 to a downwardly tapered takeover trough 15. The fishes are passed to the trough 15 either via the trough 13 or via the trough 14, depending on their position, that is to say depending on whether the fishes are supplied with the abdomen to one or to the other side in a flat lying position. Fishes supplied with their abdomen to the left must be rotated differently than fishes supplied with their abdomen to the right, so that they always come to lie in the trough 15 upright, that is to say with the abdomen downward. The fishes passed between the parts of the manipulating unit 10 are therefore taken over either while rotating through an angle of 90° upright in the trough 13, or while rotating through an angle of -90° upright in the trough 14.
5. The fishes are brought into an upwardly movable trough part in a defined position. The defined position is determined by the end wall 16 and the side walls 17 of the trough 15. The upwardly movable trough part, here the trough 15, is upwardly movable at the end near the end wall 16 by means of an operating cylinder 18. Arranged above the end of the trough 15 and a further conveying trough 19 is a conveying belt system 20 formed by an endless rail 21 and three separately driven endless conveying elements 22, 23, and 24. Movable along the rail 21 are clamping elements 25. A clamping element 25 comprises a carrier 26 movable along the rail 21 and side pieces 27 to which clamping parts in the form of forked teeth 28 are firmly attached. Arranged between the carrier 26 and the side pieces 27 are leaf springs 29, while pressure means, not shown, act on the side pieces 27 to press the teeth 28 apart, which teeth 28 are pulled toward each other under the influence of the leaf springs 29. By pressing the end of the trough 15 upward, the teeth 28 will clampingly slide over the chief bone of the fish, that is to say just back of the head of the fish, as shown in Figs. 5 and 6, the teeth of the fork first being kept apart slightly, while the teeth move slightly toward each other under spring action when the clamping element is placed around the chief bone and thereby clamps the chief bone. Thus gripped, the fishes can be pulled through the conveying trough 19 by moving the clamping elements 25 along the rail 21.
6. The clamping elements 25 with the fishes thereby gripped are passed by means of the conveying belt system 20 through successively a section for removing organs from the abdomen, a deskinning section, and a deboning section. Each of these sections has its own endless conveying element 22, 23, and 24, respectively, the clamping elements 25 always being taken over from one conveying belt by the other because, in fact, the operations in the successive sections each have their own time sequence pattern. In other words, the clamping elements 25 are moved in their guide along the rail 21 first by means of the power-driven conveying means 21, then by the power-driven conveying means 23, and finally by the power-driven conveying means 24. The takeover means for taking over the clamping elements 25 from one conveying belt to the other are, for clarity's sake, not shown in the Figures. In the section for removing organs from the abdomen, the fishes are pulled first over a cutting element 30 (Figs. 7 and 8) to cut open the undersides of the fishes and then over a rotating vane wheel 31 to remove these organs.
7. In the deskinning section, the fishes are cut in at the upper side by means of a vertically disposed cutting element, not shown, so that the skin parts to the left and right of the fish are separated from each other along the top. This cutting element is arranged beside the trough 19 and can, in each case, be moved sideward, until a height above the trough 19 at which the fish can be cut in from above just a fraction. The fish will then be passed through or along corrugated rolls 32.
8. In the deboning section, just back of the place where the clamping element 25 has gripped the bone, a stripping element is passed transversely through the fish from both sides in the horizontal direction. This stripping element consists of two stripping pins 33 which are each curved at the top such that they, when pressed through the fish from the side, form an eye 34 closing around the chief bone. By means of the stripping element, by moving the fish in the conveying direction, two fillets can be stripped off in the longitudinal direction, the sidewardly directed bones remaining stuck to the chief bone for a substantial part. Simultaneously, the back edge with the dorsal fin and thus the part of the fish above the stripping element should then be cut away. The two fillets will then only be held by the end of the chief bone near the caudal fin. In order to remove the back edge with the dorsal fin during the stripping, knives 35 arranged on both sides are provided. These knives are fixed to holders 36, each of which being connected with an operating element 37 for rotating the holders into their position above the trough 19. In order to position the stripping element at the correct height at the end of the trough 19, an operating element 38 is provided. By a knife 39 passed through or along the stripping element, the chief bone can be cut through; the two fillets, held together by the caudal fin and a chief bone stump, will then fall on the discharge means belt 40. The chief bone is released further, and the clamping element 25 is led back by the conveying belt system 20.

The invention is not limited to the exemplary embodiment described here with reference to the drawing, but comprises all kinds of modifications thereof, of course as far as falling within the scope of protection of the appended claims.

## Claims

1. A method for filleting fish, in particular matties herring, **characterized in that**, before the fish is eviscerated and is deskinned and deboned, the fish is gripped at the chief bone.

2. A method according to claim 1, **characterized in that** the fish, after having been gutted, is gripped back of the head.

3. A method according to claim 2, **characterized in that** the fish is placed with the head in a defined position, in which position a clamping element is put through the fish and clamped around the chief bone.

4. A method according to claim 3, **characterized in that** the clamping element contains two clamping parts, which, kept away from each other, can be put through the fish, and which then grip the chief bone under spring action.

5. A method according to claim 3 or 4, **characterized in that** the fish is positioned upright over its length in a trough, which trough is moved upward, until the clamping element, put through the fish, is placed around the chief bone.

6. A method according to claim 3, 4 or 5, **characterized in that** the fish, gripped at the bone by means of the clamping element, is pulled through the trough and successively passed to eviscerating, deskinning and deboning sections.

7. A method according to any one of claims 3-6, **characterized in that** the clamping element is moved along an endless rail and passed through the sections in question by means of a separate dragging element belonging to each of the sections, formed by an endless conveying element, while, in each case, the clamping element is taken over from one by the following dragging element.

8. A method according to claim 7, **characterized in that** evisceration is effected by cutting open the fish at the underside and pulling it over a rotating vane wheel.

9. A method according to claim 6, 7 or 8, **characterized in that** the fish is deskinned by passing it, after a cut has been made at the upper side of the fish, between or along corrugated rolls.

10. A method according to any one of claims 6-9, **characterized in that** deboning takes place by moving, just back of the point where the chief bone is gripped by the clamping element, a stripping element sideward through the fish, which stripping element extends around the chief bone and downward, and through which stripping element is pulled the fish with the clamping element, while, simultaneously, the back edge with the fin is cut away by means of a back cutting element, so that from each fish two fillets are obtained.

11. A method according to claim 10, **characterized in that** by means of a bone cutting element the chief bone is cut through near the caudal fin, after which by means of discharge means the two fillets, held together by the caudal fin and a chief bone stump, are discharged.

12. A method according to any one of the preceding claims, **characterized in that**, before the fish is gripped, it is oriented from any position upright in a trough with the head directed forward.

13. An apparatus for filleting fish according to the method as defined in any one of the preceding claims, which apparatus is provided with supply and orientation elements, as well as gripping elements, to which the fishes can be supplied in a defined position, while, furthermore, processing elements are provided for eviscerating, deskinning and deboning the gripped fishes, **characterized in that** a gripping element is formed by a clamping element, which, when the fish is placed with the head in a defined position, can be put through the fish and can be clamped around the chief bone.

14. An apparatus according to claim 13, **characterized in that** a trough with a positioning element is provided, which trough, when a fish has been placed therein in a defined position with the head in the direction of movement of the fish, is movable upward, until the clamping element, put through the fish, is clamped around the chief bone.

15. An apparatus according to claim 14, **characterized in that** it is provided with a rail, along which the clamping element is movable, while the fish, gripped at the bone by means of the clamping element, can be pulled through the trough and successively to eviscerating, deskinning and deboning sections.

16. An apparatus according to claim 15, **characterized in that** a number of separate dragging elements formed by endless conveying means is provided for conveying the clamping element along the rail through the separate eviscerating, deskinning and deboning sections.

17. An apparatus according to claim 16, **characterized in that** a cutting element is provided for cutting open the fishes, when pulled over it, at the undersides, as well as a rotatable vane wheel for eviscerating the fishes to be pulled over it.

18. An apparatus according to claim 16 or 17, **characterized in that** a further cutting element is provided for cutting in the fishes at the upper sides, as well as corrugated rolls for deskinning fishes pulled between or along these rolls.

19. An apparatus according to any one of claims 16-18, **characterized in that** a stripping element is provided, through which fishes can be pulled, and a back cutting element, by which, during this pulling through, the back edge with fin can be cut away from the fishes, so that from each fish two fillets are obtained.

20. An apparatus according to claim 19, **characterized in that** a bone cutting element is provided, which can be moved through or along the stripping element to cut through the chief bone near the caudal fin, as well as discharge means, by which the two fillets, held together by the caudal fin and a chief bone stump, can be discharged.

21. An apparatus according to any one of claims 13-20, **characterized in that** the supply and orientation elements are formed by a singling element for passing the fishes supplied in bulk successively through a conveying trough narrowing in the conveying direction, while by means of a detector and an orientation unit controlled by this detector the fishes, with the head in the conveying direction, are passed successively through a further conveying trough.

22. An apparatus according to claim 21, **characterized in that** the supply and orientation elements are provided with a takeover conveying trough system for taking over the fishes from the further conveying trough upright with the abdomen in a narrowed processing trough and passing the fishes to the trough with the positioning element.

23. An apparatus according to claim 22, **characterized in that** the takeover conveying trough system is provided with distribution means, by which the fishes supplied over the further conveying trough with the abdomen facing one side and the fishes supplied over the further conveying trough with the abdomen facing the other side, are taken over in separate processing troughs.

## Patentansprüche

1. Verfahren zum Filetieren von Fisch, insbesondere Matjeshering, **dadurch gekennzeichnet, dass**, bevor der Fisch ausgenommen und enthäutet und entgrätet wird, der Fisch an der Wirbelsäule gegriffen wird.

2. Verfahren nach Anspruch 1, **dadurch gekennzeichnet, dass** der Fisch, nachdem er ausgenommen ist, hinter dem Kopf gegriffen wird.

3. Verfahren nach Anspruch 2, **dadurch gekennzeichnet, dass** der Fisch mit dem Kopf in einer definierten Position platziert wird, in der ein Klemmelement durch den Fisch bewegt und um die Wirbelsäule geklemmt wird.

4. Verfahren nach Anspruch 3, **dadurch gekennzeichnet, dass** das Klemmelement zwei Klemmteile enthält, die, wenn sie auseinandergehalten werden, durch den Fisch hindurch bewegt werden können und die dann die Wirbelsäule unter Federwirkung greifen.

5. Verfahren nach Anspruch 3 oder 4, **dadurch gekennzeichnet, dass** der Fisch aufrecht entlang seiner Länge in einem Trog angeordnet wird, wobei der Trog nach oben bewegt wird, bis das Klemmelement eingeschoben den Fisch um die Wirbelsäule herum positioniert ist.

6. Verfahren nach Anspruch 3, 4 oder 5, **dadurch gekennzeichnet, dass** der Fisch, gegriffen an der Wirbelsäule von dem Klemmelement, durch den Trog gezogen wird und aufeinanderfolgend zu Ausnehmungs-, Enthäutungs- und Entgrätungsabschnitten geführt wird.

7. Verfahren nach einem der Ansprüche 3 bis 6, **dadurch gekennzeichnet, dass** das Klemmelement entlang einer endlosen Schiene bewegt und durch die fraglichen Abschnitte, von separaten, zu jedem der Abschnitte gehörenden Zugelementen hindurchbewegt wird, die durch ein endloses Förderelement gebildet sind, während in jedem Fall das Klemmelement von dem folgenden Zugelement übernommen wird.

8. Verfahren nach Anspruch 7, **dadurch gekennzeichnet, dass** das Ausnehmen ausgeführt wird, indem der Fisch an der Unterseite geöffnet und über ein rotierendes Schneidrad gezogen wird.

9. Verfahren nach Anspruch 6, 7 oder 8, **dadurch gekennzeichnet, dass** der Fisch enthäutet wird, indem er, nachdem ein Schnitt an der Oberseite des Fisches vorgenommen worden ist, zwischen oder entlang von gewellten Rollen hindurchgeführt wird.

10. Verfahren nach einem der Ansprüche 6 bis 9, **dadurch gekennzeichnet, dass** die Entgrätung ausgeführt wird, indem, gerade hinter dem Punkt, an dem die Wirbelsäule durch das Klemmelement gegriffen wird, ein Abstreifelement seitwärts durch den Fisch bewegt wird, wobei das Abstreifelement um die Wirbelsäule herum und nach unten verläuft und wobei der Fisch mit dem Klemmelement durch das Abstreifelement gezogen wird, während gleichzeitig der Rückenrand mit der Flosse mittels eines Rückenschneidelements abgeschnitten wird, so dass aus jedem Fisch zwei Filets erhalten werden.

11. Verfahren nach Anspruch 10, **dadurch gekennzeichnet, dass** mittels eines Grätenschneidelements die Wirbelsäule nahe der Schwanzflosse durchschnitten wird, wonach die beiden Filets, die durch die Schwanzflosse und einen Wirbelsäulenstumpf zusammengehalten werden, mittels von Abführeinrichtungen abgeführt werden.

12. Verfahren nach einem der vorhergehenden Ansprüche, **dadurch gekennzeichnet, dass** der Fisch, bevor er gegriffen wird, aus irgendeiner Position aufrecht in dem Trog mit dem Kopf in Vorwärtsrichtung orientiert wird.

13. Vorrichtung zum Filetieren von Fisch gemäß dem Verfahren wie in einem der vorhergehenden Ansprüche definiert, wobei die Vorrichtung mit Zufuhr- und Orientierungselementen sowie mit Greifelementen versehen ist, denen die Fische in einer definierten Position zugeführt werden können, während weiterhin Verarbeitungselemente zum Ausnehmen, Enthäuten und Entgräten der gegriffenen Fische vorgesehen sind, **dadurch gekennzeichnet, dass** ein Greifelement durch ein Klemmelement gebildet ist, das, wenn der Fisch mit dem Kopf in einer definierten Position platziert ist, durch den Fisch hindurchgeschoben und um die Wirbelsäule geklemmt werden kann.

14. Vorrichtung nach Anspruch 13, **dadurch gekennzeichnet, dass** ein Trog mit einem Positionierungselement vorgesehen ist, wobei der Trog, wenn der Fisch darin in einer definierten Position mit dem Kopf in Bewegungsrichtung des Fisches positioniert ist, nach oben beweglich ist, bis das Klemmelement hindurchgeschoben durch den Fisch um die Wirbelsäule geklemmt ist.

15. Vorrichtung nach Anspruch 14, **dadurch gekennzeichnet, dass** sie mit einer Schiene versehen ist, entlang der das Klemmelement beweglich ist, während der Fisch, wenn er an der Wirbelsäule mittels des Klemmelements gegriffen ist, durch den Trog und aufeinanderfolgend zu Ausnehmungs-, Enthäutungs- und Entgrätungsabschnitten gezogen werden kann.

16. Vorrichtung nach Anspruch 15, **dadurch gekennzeichnet, dass** eine Anzahl von separaten Zugelementen, die durch eine endlose Fördereinrichtung gebildet werden, vorgesehen ist, um das Klemmelement entlang der Schiene durch die separaten Ausnehmungs-, Enthäutungs- und Entgrätungsabschnitte zu fördern.

17. Vorrichtung nach Anspruch 16, **dadurch gekennzeichnet, dass** ein Schneidelement, um die Fische an der Unterseite aufzuschneiden, wenn sie darüber gezogen werden, sowie ein drehbares Schneidrad zum Ausnehmen der Fische, die darüber hinweggezogen werden, vorgesehen sind.

18. Vorrichtung nach Anspruch 16 oder 17, **dadurch gekennzeichnet, dass** ein weiteres Schneidelement, um die Fische an den Unterseiten aufzuschneiden, sowie gewellte Rollen zum Enthäuten von Fischen, die zwischen oder entlang dieser Rollen gezogen werden, vorgesehen sind.

19. Vorrichtung nach einem der Ansprüche 16 bis 18, **dadurch gekennzeichnet, dass** ein Abstreifelement, durch das Fische gezogen werden können, und ein Rückenschneidelement vorgesehen sind, durch das, während dieses Hindurchziehens der Rückenrand mit der Flosse von den Fischen abgeschnitten werden kann, so dass aus jedem Fisch zwei Filets erhalten werden.

20. Vorrichtung nach Anspruch 19, **dadurch gekennzeichnet, dass** ein Grätenschneidelement, das durch oder entlang des Abstreifelements bewegt werden kann, um die Wirbelsäule nahe der Schwanzflosse zu durchschneiden, sowie auch eine Abführeinrichtung vorgesehen sind, durch die die beiden Filets, die durch die Schwanzflosse und einen Wirbelsäulenstumpf zusammengehalten werden, abgeführt werden können.

21. Vorrichtung nach einem der Ansprüche 13 bis 20, **dadurch gekennzeichnet, dass** die Zufuhr- und Orientierungselemente gebildet sind durch ein Vereinzelungselement, um die als Menge zugeführten Fische aufeinanderfolgend durch einen Fördertrog, der sich in Förderrichtung verengt, zu führen, während durch einen Detektor und eine Orientierungseinheit, die von diesem Detektor gesteuert wird, diejenigen Fische, deren Kopf in Förderrichtung liegt, aufeinanderfolgend durch einen weiteren Fördertrog geführt werden.

22. Vorrichtung nach Anspruch 22, **dadurch gekennzeichnet, dass** die Zufuhr- und Orientierungselemente mit einem Übernahmefördertrogsystem versehen sind zum Übernehmen der Fische aus dem weiteren Fördertrog aufrecht mit dem Bauch in einem verengten Verarbeitungstrog und zum Führen der Fische zu dem Trog mit dem Positionierungselement.

23. Vorrichtung nach Anspruch 22, **dadurch gekennzeichnet, dass** das Übernahmefördertrogsystem mit Verteilungseinrichtungen versehen ist, durch die die Fische, die über den weiteren Fördertrog mit dem Bauch der einen Seite zugewandt zugeführt werden, und die Fische, die über den weiteren Fördertrog mit dem Bauch der anderen Seite zugewandt zugeführt werden, in separate Verarbeitungströge übernommen werden.

## Revendications

1. Procédé pour lever des filets à partir d'un poisson, en particulier un hareng, **caractérisé en ce que**, avant que le poisson soit éviscéré, dépouillé et désarêté, le poisson est saisi au niveau de l'arête principale.

2. Procédé selon la revendication 1, **caractérisé en ce que** le poisson, après avoir été éviscéré, est saisi derrière la tête.

3. Procédé selon la revendication 2, **caractérisé en ce que** le poisson est placé en ayant la tête dans une position définie, position dans laquelle un élément de serrage est introduit à travers le poisson et serré autour de l'arête principale.

4. Procédé selon la revendication 3, **caractérisé en ce que** l'élément de serrage contient deux parties de serrage qui, maintenues éloignées l'une de l'autre, peuvent être placées à travers le poisson, et qui saisissent alors l'arête principale sous une action de ressort.

5. Procédé selon la revendication 3 ou 4, **caractérisé en ce que** le poisson est positionné à la verticale sur sa longueur dans une goulotte, laquelle goulotte est déplacée vers le haut jusqu'à ce que l'élément de serrage introduit à travers le poisson soit placé autour de l'arête principale.

6. Procédé selon la revendication 3, 4 ou 5, **caractérisé en ce que** le poisson, saisi au niveau de l'arête par l'intermédiaire de l'élément de serrage, est tiré à travers la goulotte et successivement passé dans des tronçons d'éviscération, de dépouillement et d'enlèvement des arêtes.

7. Procédé selon l'une quelconque des revendications 3 à 6, **caractérisé en ce que** l'élément de serrage est déplacé le long d'un rail sans fin et passé à travers les tronçons en question par l'intermédiaire d'un élément de traînage séparé appartenant à chacun des tronçons, formé par un élément de transport sans fin alors que, dans chaque cas, l'élément de serrage est remplacé par l'intermédiaire de l'élément de traînage suivant.

8. Procédé selon la revendication 7, **caractérisé en ce qu'**une éviscération est réalisée en découpant le poisson pour l'ouvrir au niveau de la face inférieure et en le tirant sur une roue à aubes rotatives.

9. Procédé selon la revendication 6, 7 ou 8, **caractérisé en ce que** le poisson est dépouillé en le faisant passer, après qu'une découpe ait été réalisée sur le côté supérieur du poisson, entre des roulettes striées ou le long de celles-ci.

10. Procédé selon l'une quelconque des revendications 6 à 9, **caractérisé en ce qu'**un enlèvement d'arêtes se produit en déplaçant, juste à l'arrière de l'endroit où l'arête principale est saisie par l'élément de serrage, un élément de dépouillement vers le côté à travers le poisson, lequel élément de dépouillement s'étend autour de l'arête principale et vers le bas, et élément de dépouillement à travers lequel est tiré le poisson muni de l'élément de serrage alors que, simultanément, le bord arrière incluant la nageoire est coupé par l'intermédiaire d'un élément de coupe arrière, de sorte que deux filets sont obtenus à partir de chaque poisson.

11. Procédé selon la revendication 10, **caractérisé en ce que**, par l'intermédiaire d'un élément de découpe d'arête, l'arête principale est coupée en travers près de la nageoire caudale, après quoi, par l'intermédiaire de moyens d'évacuation, les deux filets, maintenus ensemble par la nageoire caudale et par un bout d'arête principale, sont évacués.

12. Procédé selon l'une quelconque des revendications précédentes, **caractérisé en ce que**, avant que le poisson soit saisi, il est orienté à partir d'une position quelconque verticalement dans une goulotte en ayant la tête dirigée vers l'avant.

13. Dispositif pour lever des filets à partir d'un poisson selon le procédé tel que défini dans l'une quelconque des revendications précédentes, lequel dispositif comporte des éléments d'alimentation et d'orientation, ainsi que des éléments de saisie, vers lesquels les poissons peuvent être acheminés dans une position définie alors que, de plus, des éléments de traitement sont prévus pour éviscérer, dépouiller et désarêter les poissons saisis, **caractérisé en ce qu'**un élément de saisie est formé par un élément de serrage qui, lorsque le poisson est placé en ayant la tête dans une position définie, peut être introduit à travers le poisson et peut être serré autour de l'arête principale.

14. Dispositif selon la revendication 13, **caractérisé en ce qu'**une goulotte munie d'un élément de positionnement est agencée, laquelle goulotte, lorsqu'un poisson a été placé dans celle-ci dans une position définie en ayant la tête dans la direction de déplacement du poisson, est mobile vers le haut jusqu'à ce que l'élément de serrage introduit à travers le poisson soit serré autour de l'arête principale.

15. Dispositif selon la revendication 14, **caractérisé en ce qu'**il comporte un rail le long duquel l'élément de serrage est mobile alors que le poisson, saisi au niveau de l'arête par l'intermédiaire de l'élément de serrage, peut être tiré à travers la goulotte et successivement jusqu'aux tronçons d'éviscération, de dépouillement et d'enlèvement des arêtes.

16. Dispositif selon la revendication 15, **caractérisé en ce qu'**un ensemble d'éléments de traînage séparés, formés par des moyens de transport sans fin, est prévu pour acheminer l'élément de serrage le long du rail à travers les tronçons séparés d'éviscération, de dépouillement et d'enlèvement des arêtes.

17. Dispositif selon la revendication 16, **caractérisé en ce qu'**un élément de coupe est prévu pour découper les poissons pour les ouvrir, lorsqu'ils sont tirés sur celui-ci, au niveau des faces inférieures, ainsi qu'une roue à aubes rotatives pour éviscérer les poissons à tirer sur celle-ci.

18. Dispositif selon la revendication 16 ou 17, **caractérisé en ce qu'**un élément de coupe supplémentaire est prévu pour réaliser une découpe dans les poissons au niveau des côtés supérieurs, ainsi que des roulettes striées pour dépouiller des poissons tirés entre ces molettes ou le long de celles-ci.

19. Dispositif selon l'une quelconque des revendications 16 à 18, **caractérisé en ce qu'**un élément de dépouillement est prévu, à travers lequel des poissons peuvent être tirés, et un élément de coupe arrière par l'intermédiaire duquel, pendant cette traction à travers l'élément, le bord arrière incluant la nageoire peut être découpé et séparé des poissons, de sorte que deux filets sont obtenus à partir de chaque poisson.

20. Dispositif selon la revendication 19, **caractérisé en ce qu'**un élément de découpe d'arête est prévu, qui peut être déplacé à travers l'élément de dépouillement ou le long de celui-ci pour couper à travers l'arête principale près de la nageoire caudale, ainsi que des moyens d'évacuation par l'intermédiaire desquels les deux filets, maintenus ensemble par la nageoire caudale et par un bout d'arête principale, peuvent être évacués.

21. Dispositif selon l'une quelconque des revendications 13 à 20, **caractérisé en ce que** les éléments d'alimentation et d'orientation sont formés par un élément de tri pour faire passer les poissons acheminés en vrac de manière successive à travers une goulotte de transport qui rétrécit dans la direction de transport alors que, par l'intermédiaire d'un détecteur et d'une unité d'orientation commandée par ce détecteur, les poissons ayant la tête dans la direction de transport, sont successivement passés à travers une goulotte de transport supplémentaire.

22. Dispositif selon la revendication 21, **caractérisé en ce que** les éléments d'alimentation et d'orientation comportent un système de goulotte de transport de réception pour réceptionner les poissons provenant de la goulotte de transport supplémentaire, positionnés verticalement en ayant l'abdomen dans une goulotte de traitement rétrécie et pour faire passer les poissons dans la goulotte munie de l'élément de positionnement.

23. Dispositif selon la revendication 22, **caractérisé en ce que** le système de goulotte de transport de réception est muni de moyens de distribution par l'intermédiaire desquels les poissons acheminés sur la goulotte de transport supplémentaire en ayant l'abdomen dirigé d'un côté et les poissons acheminés sur la goulotte de transport supplémentaire en ayant l'abdomen dirigé de l'autre côté, sont réceptionnés dans des goulotte de traitement séparées.
